# EUROPEAN PATENT SPECIFICATION

(11) **EP 1 106 392 B1**
(45) Date of publication and mention of the grant of the patent: **01.06.2005**
(21) Application number: 00310983.2
(22) Date of filing: 08.12.2000
(51) Int. Cl.: B60C 11/04, B60C 11/13, B29C 33/42, B29C 35/02, B29D 30/06, B60C 11/11

(54) **Pneumatic tyre, tyre mould and process for the manufacture of the same**
Luftreifen sowie Vulkanisierformwerkzeug und Verfahren zur Herstellung von dergestalten Luftreifen
Pneumatique ainsi que moule de vulcanisation et procédé pour la fabication d'un tel pneumatique

(30) Priority: 09.12.1999 JP 35068699
(43) Date of publication of application: 13.06.2001
(73) Proprietor: SUMITOMO RUBBER INDUSTRIES LIMITED, Kobe-shi, Hyogo-ken (JP)
(72) Inventor: Funahara, Kiyoshi, c/o Sumitomo Rubber Ind. Ltd., Kobe-shi, Hyogo-ken (JP)
(74) Representative: Manitz, Finsterwald & Partner

(56) References cited:
- EP-A- 0 726 174
- EP-A- 0 836 955
- EP-A- 1 106 395
- WO-A-98/31555
- US-A- 4 687 037
- US-A- 5 375 639

## Description

The present invention relates to a pneumatic tyre, a tyre mould and a process for the manufacture of the same, more particularly to an improvement in a tread groove bottom.

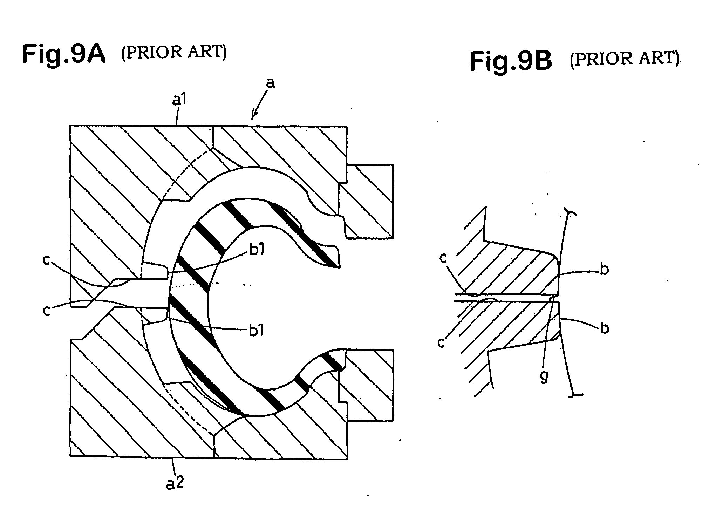

In comparison with a radial tyre, a bias tyre may have a large expansion in a tyre mould due to structural reasons such as carcass cord angles, breaker cord angles and the like. Therefore, to vulcanise such a bias tyre, a two-piece mould or single-split mould (a) as shown in Fig.9A can be used to reduce the cost and increase the production efficiency. Even in such a bias tyre, however, if the expansion is too large, the carcass cord elongation becomes uneven around the tyre and the tyre uniformity is deteriorated. As the carcass cord tension increases, the pressure against the mould decreases, and defective mouldings increase due to bareness of rubber. Therefore, it is better to make the green tyre (t) as large as possible to decrease the expansion. As a result, as shown in Fig.9B, the distance between the green tyre and the mould decreases, and when the mould is closed, a part (g) of the green tyre which is located near the split faces (c) of the mould and almost in contact therewith is liable to be pinched between the split faces (c) and the tyre appearance is deteriorated by the mould flash. Thus, it is difficult to prevent the rubber pinch caused by increasing the green tyre size and the deterioration in the tyre uniformity caused by a large expansion of the green tyre at the same time. It is especially difficult in the case of off-road motorcycle tyres whose tread grooves are rather deep.

Document EP-A1-0836955 discloses a tyre having a protrusion extending circumferentially in a tread groove located on the tyre equator. However, nothing is said about obviating a rubber pinch effect.

It is therefore, an object of the present invention to provide a pneumatic tyre and a tyre mould, in which the size of the green tyre can be increased while preventing the rubber pinch effectively and thus the appearance of the tyre and tyre uniformity can be improved.

This object is achieved by a tyre having the features of claim 1, by a tyre mould having the features of claim 7 and by a method of manufacturing a tyre having the features of claim 10.

Embodiments of the present invention will now be described in detail in conjunction with the accompanying drawings:
Fig.1 is a cross sectional view of a pneumatic tyre according to the present invention;
Fig.2 is a developed plan view showing an example of the tread pattern thereof;
Fig.3 is a cross sectional view of an example of the protrusion;
Fig.4 is a cross sectional view of another example of the protrusion;
Fig.5 is a perspective view of the protrusion;
Fig.6 is a cross sectional view of a tyre vulcanising mould according to the present invention;
Fig.7 is a cross sectional view of an anti-pinching corner cut thereof;
Fig.8 is a diagram for explaining a function of the anti-pinching corner cut;
Fig.9A is a cross sectional view showing a conventional tyre vulcanising mould; and
Fig.9B is a diagram for explaining the problem thereof.

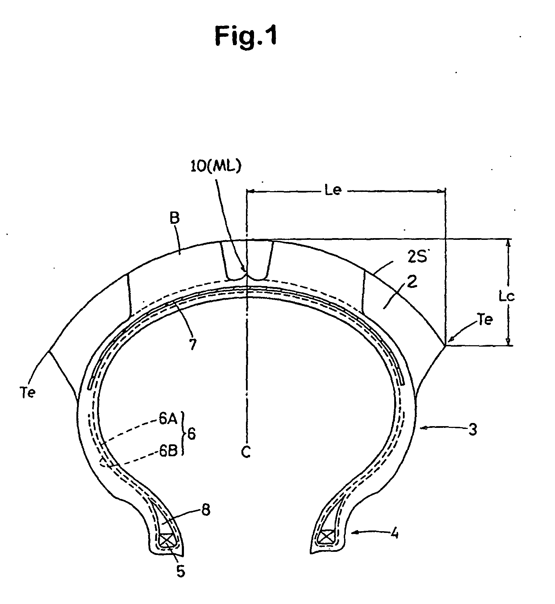

In the drawings, and in particular in Fig. 1, a pneumatic tyre according to the present invention comprises a tread portion 2 with tread edges Te, a pair of sidewall portions 3, a pair of bead portions 4 each with a bead core 5 and a bead apex 8 therein, and a carcass 6 extending between the bead portions 4.

The pneumatic tyre in this example is an off-road motorcycle tyre having a tread face 2S which is convexly curved in the tyre meridian section so that the maximum tyre section width lies between the tread edges Te, and the tread camber which is the ratio Lc/Le of the radial distance Lc to axial distance Le between two points on the tread face 2S at the tyre equator C and tread edge Te is in a range of from 0.45 to 0.65 (0.54 in Fig.1).

The carcass 6 in this example is a bias ply carcass comprising two crossed plies of cords arranged at bias angles of from 25 to 60 degrees with respect to the circumferential direction of the tyre. Each ply extends between the bead portions 4 through the tread portion 2 and sidewall portions 3 and turned up around the bead core 5 in each bead portion so that the carcass 6 has a pair of turned up portions 6B and a main portion 6A therebetween. Preferably, organic fibre cords, e.g. nylon, polyester, rayon and the like are used for the carcass cords.

Between the turned up portion 6B and the main portion 6A in each of the bead portions 4, there is disposed a rubber bead apex 8 extending radially outwardly from the bead core 5 while tapering towards its radially outer end.

In the tread portion 2, a breaker 7 is disposed on the radially outside of the carcass 6. The breaker 7 is composed of at least one ply (in this example only one ply) of cords laid at angles of from 25 to 60, preferably 35 to 60 degrees with respect to the circumferential direction of the tyre. For the breaker cords, the same organic fibre cord as the carcass are suitably used.

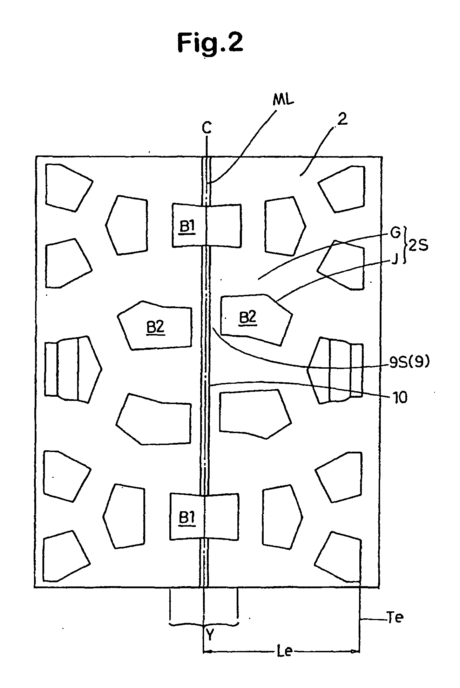

As shown in Fig. 2, the tread portion 2 is provided with tread grooves G which divide the tread portion 2 into tread elements J.

In the example shown in Fig.2, the tread elements J are blocks B including central blocks B1 disposed on the tyre equator C and side blocks B2 disposed off the tyre equator C. The tread pattern is accordingly a block pattern.

The grooved part or the bottom of the tread grooves G is provided with a protrusion 10 extending along a mould parting line ML. In this embodiment, the mould parting line ML runs on the tyre equator C. Thus, the protrusion 10 extends along the tyre equator C while being interrupted by the above-mentioned central blocks B1. Each part of the protrusion 10 between the central blocks B1 is continuous and the ends thereof are connected to the blocks B1.

However, in the case that there is no tread element (block) on the mould parting line (tyre equator), the protrusion 10 is continuous in the circumferential direction.

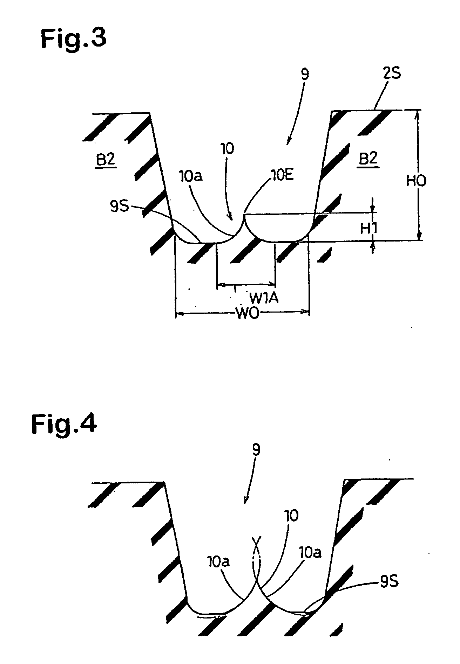

As shown in Fig.3, the width W1 of the protrusion 10 gradually decreases from the groove bottom 9S to the radially outer end 10E thereof. Therefore, the protrusion 10 has a substantially triangular cross sectional shape. Preferably, the side faces 10a are concavely curved to prevent cracks from spreading towards the groove bottom 9S. In Fig.3 showing an example, each side face 10a is curved along a circle not intersecting the groove bottom 9S. In Fig.4 showing another example, each side face 10a is curved along a circle intersecting the groove bottom 9S.

At the groove bottom 9S, the protrusion 10 preferably has a width W1A of from 0.5 to 1.0 times the width W0 of the groove 9. The radial height H1 of the protrusion 10 measured from the groove bottom 9S to the radially outer end 10E is preferably set in a range of from 0.1 to 0.3 times the depth H0 of the groove bottom 9S from the tread face 2S. In the case of motorcycle tyres, usually the height H1 is set in a range of from 1.5 to 2.5 mm and the width W1A is set in a range of from 4.0 to 8.0 mm.

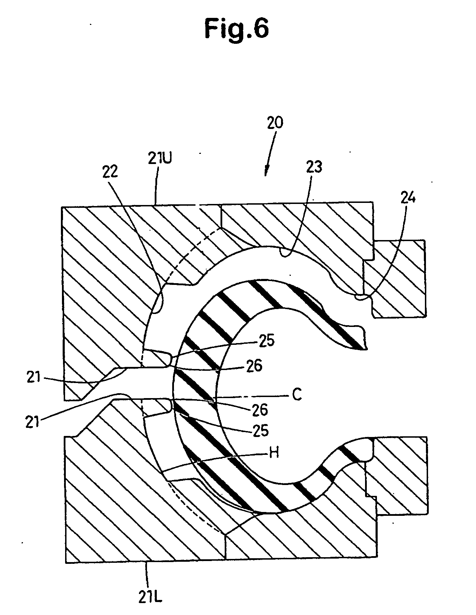

The protrusion 10 is formed through a tyre vulcanising process as the result of preventing unvulcanised tread rubber from being pinched between split faces 21 of a mould 20, as shown in Fig. 6.

Fig.6 shows an example of the mould 20 which is a single-split mould comprising an upper mould 21U and a lower mould 21L their split faces 21 form a parting line. The parting line is, as shown in Fig.2 (ML), located within a tread centre region Y having an axial width of 20% of the tread width (Le x 2) between the tread edges Te (Fig. 1), and the parting line extends around the tyre. In this embodiment, the parting line is formed along the tyre equator C.

The upper mould 21U and lower mould 21L are mounted on a ram and a bed of a press, respectively. Thus, the upper mould 21U and lower mould 21L can be opened and closed together by up and down motions of the ram.

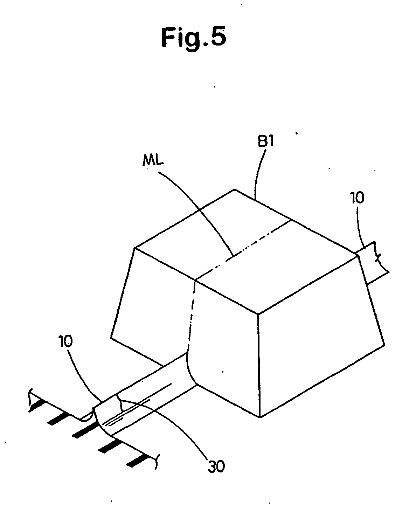

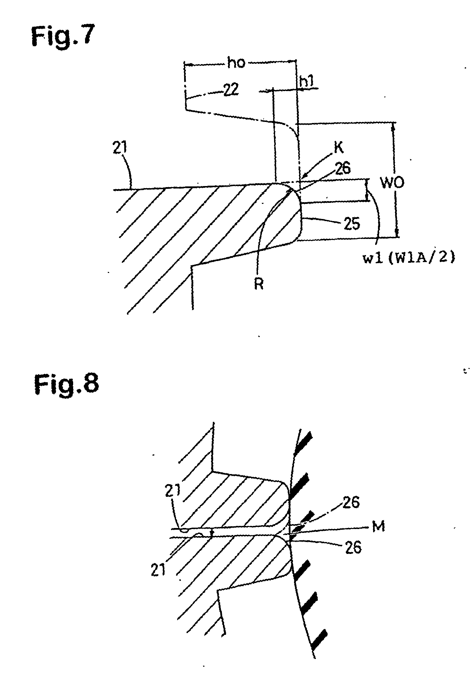

As shown in Fig. 6, the mould 21 has a tread shaping face 22 for shaping the tread portion, a sidewall shaping face 23 for shaping each of the sidewall portions, and a bead shaping face 24 for shaping each of the bead portions. The tread shaping face 22 is provided with protruding parts for making the tread grooves. The above-mentioned parting line runs in the tread shaping face 22 across some of the protruding parts 25 located on the mould parting line. As shown in Fig.7, with respect to each protruding part 25 located on the mould parting line, each of the upper mould and lower mould is provided on the corner K between the split face 21 and the tread shaping face 22 with an anti-pinching cut 26. In the tyre meridian section, the anti-pinching cut 26 is convexly curved preferably having a radius of curvature R in a range of from 2.0 to 4.0 mm. In case of Fig.3, the surface of the anti-pinching cut is merged into the split face and the tread shaping face. But, in case of Fig.5, the surface intersects the split face and the tread shaping face.

As the height h1 and width w1 of the anti-pinching cut 26 correspond to the above-mentioned height H1 and width W1A/2 of the protrusion 10, these values are determined as follows. The height h1 is in a range of from 0.1 to 0.3 times the radial height h0 of the protruding part 25. The width w1 is in a range of from 0.5/2 to 1.0/2 times the width W0, that is, 0.25 to 0.5 times W0.

If (H1, h1) is less than 0.1 times (H0, h0), rubber pinch can not be fully prevented. If (H1, h1) is more than 0.3 times (H0, h0), the protrusion 10 is liable to crack as shown in Fig.5 by circumferential stress at the time of braking and accelerating. Accordingly the tyre strength is liable to decrease. If W1A is less than 0.5 times W0 or w1 is less than 0.25 times W0, cracks are also liable to occur.

As shown in Fig.6, the green tyre is placed between the upper mould 21U and lower mould 21L, and the mould 20 is closed. Then, using a bladder put in the tyre, the green tyre is inflated to be pressed against the shaping faces 22, 23 and 24 of the mould 20. The tyre is heated to be vulcanised.

When the upper mould 21U and lower mould 21L approach each other to close the mould, as the corners K (Fig. 7) are rounded, sweeping-up of the surface rubber by the corners K is reduced.

Further, when if the mould is completely closed, between the split faces 21, there is formed a gap M gradually decreasing radially outwards from the tread shaping face 22 as shown in Fig.8. As a result, the protrusion 10 is formed in the groove bottom of the moulded tyre. Owing to this gap M, when closing the mould, the split faces 21 can contact each other before the tread rubber reaches to the end of the gap, and rubber pinch can be prevented. Therefore, the green tyre can be formed as large as the tread rubber almost contacts with the protruding parts 25 as shown in Fig.6. Accordingly, the necessary tyre expansion in the mould 20 is minimised, and the bareness of tread rubber and deterioration in the tyre uniformity can be controlled.

### Comparison Tests

Off-road motorcycle tyres (tyre size 4.10-18, rim size 2.15) having the same structure shown in Fig.1 and Fig.2 except for protrusions were made and tested for rubber pinch and crack. The test results and the specifications of the protrusions are shown in Table 1.

### Crack test:

A 250cm³ motorcycle provided on the rear wheel with the test tyre (pressure 225 kPa) was run for 30 kilometres in a tyre test course at high speed (max. 210 km/h), and the protrusion was checked for cracks.

**Table 1**

| Tyre | 1 | 2 | 3 | 4 | 5 | 6 | 7 | 8 |
|---|---|---|---|---|---|---|---|---|
| circumferential groove | | | | | | | | |
| Height H0 (h0) (mm) | 11.5 | 11.5 | 11.5 | 11.5 | 11.5 | 11.5 | 11.5 | 11.5 |
| Bottom width W0 (mm) | 6 | 6 | 6 | 6 | 6 | 6 | 6 | 6 |
| Protrusion | none | | | | | | | |
| Height H1 (h1) (mm) | 0 | 1 | 1 | 1.5 | 2 | 2 | 2.5 | 3 |
| H1/H0 (%) | | 8.7 | 8.7 | 13 | 17.4 | 17.4 | 21.7 | 26.1 |
| Width W1 (2 w1) (mm) | 0 | 2 | 3.5 | 3 | 4 | 5.5 | 5 | 6 |
| W1/W0 (%) | | 33 | 58 | 50 | 67 | 92 | 83 | 100 |
| Radius R (mm) | - | 1 | 2 | 1.5 | 2 | 3 | 2.5 | 3 |
| Test results *1 | | | | | | | | |
| Rubber pinch | X | X | ○ | ○ | ○ | ○ | ○ | ○ |
| Crack | - | ○ | ○ | ○ | ○ | ○ | ○ | ○ |

| | | | | | | | | |
|---|---|---|---|---|---|---|---|---|
| *1) ○= not occurred, X= occurred | | | | | | | | |

As explained above, the present invention can be suitably applied to the above-mentioned off-road bias tyres for motorcycles and moulds therefor, but it is also possible to apply to various tyres for passenger cars and the like and moulds therefor.

## Claims

1. A pneumatic tyre comprising a tread portion (2) provided with tread grooves (G) defining a groove bottom (9S), and a mould parting line (ML) in the groove bottom, said mould parting line (ML) extending circumferentially of the tyre, **characterized in that** said groove bottom is provided with a protrusion (10) protruding radially outwardly from the groove bottom (9S) and extending along said mould parting line (ML), wherein the protrusion has a triangular cross sectional shape, the width (W) of the protrusion gradually decreases from the groove bottom (9S) to the radially outer end (10E) of the protrusion and the height of the protrusion is from 0.1 to 0.3 times the depth of the groove bottom (9S).

2. A pneumatic tyre according to claim 1, **characterised in that** said mould parting line (ML) is located within a tread centre region (Y) having an axial width of 20% of the tread width between the tread edges.

3. A pneumatic tyre according to claim 1, **characterised in that** said protrusion (10) extends along the tyre equator.

4. A pneumatic tyre according to claim 1, 2 or 3, **characterised in that** the protrusion (10) has a width of from 0.5 to 1.0 times a groove width at the groove bottom.

5. A pneumatic tyre according to claim 1, 2, 3 or 4, **characterised in that** said tread grooves (G) divide the tread portion (2S) into tread elements and the tread elements include tread elements which are located on the mould parting line and by which the protrusion is interrupted.

6. A pneumatic tyre according to claim 1, 2, 3, 4 or 5, **characterised by** a carcass (6) comprising two crossed plies of cords arranged at bias angles of from 25 to 60 degrees with respect to the circumferential direction of the tyre.

7. A mould for a tyre, the tyre having a tread portion (2) provided with tread grooves (G) defining a groove bottom (9S), and comprising a tread shaping face (22) for shaping the tread portion, and at least two moulds (21U,21L) being split faces (21) forming a parting line (ML) on the tread shaping face (22), the tread shaping face (22) being provided with protruding parts (25) for forming the tread grooves (G), wherein said parting line (ML) extends across at least one of the protruding parts so that the mould parting line (ML) runs circumferentially in the groove bottom of a moulded tyre,
**characterized in that** in said at least one of the protruding parts, a corner (K) between the tread shaping face (22) and each of the split faces (21) being cut off by a convex arc so that a gradually decreasing gap is formed between the split faces, and wherein the height (h1) of the cut is in a range of from 0.1 to 0.3 times the height (h0) of the protruding part (25).

8. A tyre mould according to claim 7, **characterised in that** said parting line (ML) extends within a tread centre region having an axial width of 20% of the tread width between the tread edges.

9. A tyre mould according to claim 7, **characterised in that** said parting line (ML) extends along the tyre equator.

10. Method of manufacturing a tyre comprising the steps of:
providing a mould having at least two moulds (21U,21L) and a tread shaping face (22) on the moulds for shaping a tread portion of the tyre, the at least two moulds (21U,21L) being split faces (21) forming a parting line (ML) on the tread shaping face (22), the tread shaping face (22) being provided with protruding parts (25) for forming tread grooves (G), wherein said parting line (ML) extends across at least one of the protruding parts so that the mould parting line (ML) runs circumferentially in the groove bottom of a moulded tyre, and wherein in at least one of the protruding parts a corner (K) between the tread shaping face (22) and each of the split faces (21) is cut off by a convex arc so that a gradually decreasing gap is formed between the split faces, wherein the height (h1) of the cut is in a range of from 0.1 to 0.3 times the height (h0) of the protruding part (25),
arranging a green tyre in the tyre mould,
closing the tyre mould and curing the tyre,
opening the tyre mould and removing the cured tyre.

## Patentansprüche

1. Luftreifen mit einem Laufflächenabschnitt (2), der mit Laufflächenrillen (G), die einen Rillengrund (9S) definieren, und einer Formtrennlinie (ML) in dem Rillengrund versehen ist, wobei die Formtrennlinie (ML) sich in Umfangsrichtung des Reifens erstreckt, **dadurch gekennzeichnet, dass** der Rillengrund mit einem Vorsprung (10) versehen ist, der radial nach außen von dem Rillengrund (9S) vorsteht und sich entlang der Formtrennlinie (ML) erstreckt, wobei der Vorsprung eine dreieckige Querschnittsform aufweist, die Breite (W) des Vorsprunges von dem Rillengrund (9S) bis zu dem radial äußeren Ende (10E) des Vorsprunges allmählich abnimmt und die Höhe des Vorsprunges das 0,1- bis 0,3-fache der Tiefe des Rillengrundes (9S) beträgt.

2. Luftreifen nach Anspruch 1, **dadurch gekennzeichnet, dass** die Formtrennlinie (ML) sich innerhalb des Laufflächenmittelbereiches (Y) befindet, der eine axiale Breite von 20% der Laufflächenbreite zwischen den Laufflächenkanten aufweist.

3. Luftreifen nach Anspruch 1, **dadurch gekennzeichnet, dass** der Vorsprung (10) sich entlang des Reifenäquators erstreckt.

4. Luftreifen nach Anspruch 1, 2 oder 3, **dadurch gekennzeichnet, dass** der Vorsprung (10) eine Breite des 0,5- bis 1,0-fachen einer Rillenbreite am Rillengrund aufweist.

5. Luftreifen nach Anspruch 1, 2, 3 oder 4, **dadurch gekennzeichnet, dass** die Laufflächenrillen (G) den Laufflächenabschnitt (2S) in Laufflächenelemente unterteilen, und die Laufflächenelemente Laufflächenelemente umfassen, die sich auf der Formtrennlinie befinden und durch die der Vorsprung unterbrochen ist.

6. Luftreifen nach Anspruch 1, 2, 3, 4 oder 5, **gekennzeichnet durch** eine Karkasse (6), die zwei gekreuzte Lagen aus Korden umfasst, die unter Schrägstellungswinkeln von 25 bis 60 Grad in Bezug auf die Umfangsrichtung des Reifens angeordnet sind.

7. Form für einen Reifen, wobei der Reifen einen Laufflächenabschnitt (2) aufweist, der mit Laufflächenrillen (G) versehen ist, die einen Rillengrund (9S) definieren, und mit einer Laufflächen-Formungsfläche (22) zum Formen des Laufflächenabschnittes, und zumindest zwei Formen (21U, 21L), die geteilte Flächen (21) sind, welche eine Trennlinie (ML) auf der Laufflächen-Formungsfläche (22) bilden, wobei die Laufflächen-Formungsfläche (22) mit vorspringenden Teilen (25) zum Bilden der Laufflächenrillen (G) versehen ist, wobei die Trennlinie (ML) sich über zumindest einen der vorspringenden Teile erstreckt, so dass die Formtrennlinie (ML) in Umfangsrichtung in dem Rillengrund eines in der Form hergestellten Reifens verläuft, **dadurch gekennzeichnet, dass** in dem zumindest einen der vorspringenden Teile eine Ecke (K) zwischen der Laufflächen-Formungsfläche (22) und jeder der geteilten Flächen (21) durch einen konvexen Bogen abgeschnitten ist, so dass zwischen den geteilten Flächen ein allmählich abnehmender Spalt gebildet ist, und wobei die Höhe (h1) des Schnittes im Bereich des 0,1- bis 0,3-fachen der Höhe (h0) des vorspringenden Teils (25) liegt.

8. Reifenform nach Anspruch 7, **dadurch gekennzeichnet, dass** die Trennlinie (ML) sich in einem Laufflächenmittelbereich erstreckt, der eine axiale Breite von 20% der Laufflächenbreite zwischen den Laufflächenkanten aufweist.

9. Reifenform nach Anspruch 7, **dadurch gekennzeichnet, dass** die Trennlinie (ML) sich entlang des Reifenäquators erstreckt.

10. Verfahren zum Herstellen eines Reifens mit den Schritten, dass:
eine Form bereitgestellt wird, die zumindest zwei Formen (21 U, 21 L) und eine Laufflächen-Formungsfläche (22) an den Formen zum Formen eines Laufflächenabschnittes des Reifens aufweist, wobei die zumindest zwei Formen (21 U, 21 L) geteilte Flächen (21) sind, die eine Trennlinie (ML) an der Laufflächen-Formungsfläche (22) bilden, wobei die Laufflächen-Formungsfläche (22) mit vorspringenden Teilen (25) zum Bilden von Laufflächenrillen (G) versehen wird, wobei die Trennlinie (ML) sich über zumindest einen der vorspringenden Teile erstreckt, so dass die Formtrennlinie (ML) in Umfangsrichtung in dem Rillengrund eines in der Form hergestellten Reifens verläuft, und wobei in zumindest einem der vorspringenden Teile eine Ecke (K) zwischen der Laufflächen-Formungsfläche (22) und jeder der geteilten Flächen (21) durch einen konvexen Bogen abgeschnitten wird, so dass zwischen den geteilten Flächen ein allmählich abnehmender Spalt gebildet wird, wobei die Höhe (h1) des Schnittes im Bereich des 0,1- bis 0,3-fachen der Höhe (h0) des vorspringenden Teils (25) liegt,
ein Rohreifen in der Reifenform angeordnet wird,
die Reifenform geschlossen und der Reifen vulkanisiert wird,
die Reifenform geöffnet und der vulkanisierte Reifen entnommen wird.

## Revendications

1. Bandage pneumatique comprenant une partie de bande de roulement (2) dotée de rainures (G) de bande de roulement définissant une partie inférieure de rainure (9S), et un plan de joint (ML) de moule dans la partie inférieure de rainure, ledit plan de joint (ML) de moule s'étendant sur la circonférence du bandage, **caractérisé en ce que** ladite partie inférieure de rainure est prévue avec une saillie (10) faisant saillie radialement vers l'extérieur à partir de la partie inférieure de rainure (9S) et s'étendant le long dudit plan de joint (ML) de moule, dans lequel la saillie a une forme de section transversale triangulaire, la largeur (W) de la saillie diminue progressivement de la partie inférieure de rainure (9S) à l'extrémité (10E) radialement externe de la saillie et la hauteur de la saillie représente de 0,1 à 0,3 fois la profondeur de la partie inférieure de rainure (9S).

2. Bandage pneumatique selon la revendication 1, **caractérisé en ce que** le plan de joint (ML) de moule est situé dans une région centrale (Y) de bande de roulement ayant une largeur axiale représentant 20% de la largeur de bande de roulement entre les bords de bande de roulement.

3. Bandage pneumatique selon la revendication 1, **caractérisé en ce que** ladite saillie (10) s'étend le long de l'équateur du bandage.

4. Bandage pneumatique selon la revendication 1, 2 ou 3, **caractérisé en ce que** la saillie (10) a une largeur représentant 0,5 à 1,0 fois une largeur de rainure au niveau de la partie inférieure de rainure.

5. Bandage pneumatique selon la revendication 1, 2, 3 ou 4, **caractérisé en ce que** lesdites rainures (G) de bande de roulement divisent la partie de bande de roulement (2S) en éléments de bande de roulement et les éléments de bande de roulement comprennent les éléments de bande de roulement qui sont situés sur le plan de joint du moule et grâce auxquels la saillie est arrêtée.

6. Bandage pneumatique selon la revendication 1, 2, 3, 4 ou 5, **caractérisé par** une carcasse (6) comprenant deux plis croisés de corde agencés selon des angles de biais allant de 25 à 60 degrés par rapport à la direction circonférentielle du bandage.

7. Moule destiné à un bandage, le bandage comprenant une partie de bande de roulement (2) dotée de rainures de bande de roulement (G) définissant une partie inférieure de rainure (9S), et comprenant une face (22) formant bande de roulement pour former la partie de bande de roulement, et au moins deux moules (21U, 21L) qui sont des faces fendues (21) formant un plan de joint (ML) sur la face (22) formant bande de roulement, la face (22) formant bande de roulement étant prévue avec des parties en saillie (25) pour former les rainures (G) de bande de roulement, dans lequel ledit plan de joint (ML) s'étend sur au moins l'une des parties en saillie de sorte que le plan de joint (ML) de moule s'étend circonférentiellement dans la partie inférieure de rainure d'un bandage moulé,
**caractérisé en ce que** dans lesdites au moins une des parties en saillie, un coin (K) situé entre la face (22) formant bande de roulement et chacune des faces fendues (21) est coupé par un arc convexe de sorte qu'un espace diminuant progressivement est formé entre les faces fendues, et dans lequel la hauteur (h1) de la découpe représente de 0,1 à 0,3 fois la hauteur (h0) de la partie en saillie (25).

8. Moule pour bandage pneumatique selon la revendication 7, **caractérisé en ce que** ledit plan de joint (ML) s'étend dans une région centrale de bande de roulement ayant une largeur axiale représentant 20% de la largeur de bande de roulement entre les bords de bande de roulement.

9. Moule pour bandage pneumatique selon la revendication 7, **caractérisé en ce que** ledit plan de joint (ML) s'étend le long de l'équateur du bandage.

10. Procédé de fabrication d'un bandage comprenant les étapes consistant à :
prévoir un moule comprenant au moins deux moules (21U, 21L) et une face (22) formant bande de roulement sur les moules pour former une partie de bande de roulement du bandage, les au moins deux moules (21U, 21L) étant des faces fendues (21) formant un plan de joint (ML) sur la face (22) formant bande de roulement, la face (22) formant bande de roulement étant prévue avec des parties en saillie (25) pour former des rainures (G) de bande de roulement, dans lequel ledit plan de joint (ML) s'étend sur au moins l'une des parties en saillie de sorte que le plan de joint (ML) du moule s'étend de manière circonférentielle dans la partie inférieure de rainure d'un bandage moulé, et dans lequel dans au moins l'une des parties en saillie, un coin (K) situé entre la face (22) formant bande de roulement et chacune des faces fendues (21) est coupé par un arc convexe de sorte qu'un espace progressivement décroissant est formé entre les faces fendues, dans lequel la hauteur (h1) de la découpe représente de 0,1 à 0,3 fois la hauteur (h0) de la partie en saillie (25),
agencer un bandage cru dans le moule pour bandage,
fermer le moule pour bandage et faire durcir le bandage,
ouvrir le moule pour bandage et retirer le bandage durci.
